(19) Europäisches Patentamt
European Patent Office
Office européen des brevets

(11) Veröffentlichungsnummer : **0 061 624**
**B1**

(12) **EUROPÄISCHE PATENTSCHRIFT**

(45) Veröffentlichungstag der Patentschrift : **20.02.85**

(51) Int. Cl.⁴ : **C 09 B 3/00**, C 09 B 5/00, C 09 B 7/00, C 09 B 11/24, C 09 B 25/00, C 09 B 57/00, C 09 B 69/00

(21) Anmeldenummer : **82102006.2**

(22) Anmeldetag : **12.03.82**

(54) **Kationische Farbstoffe und deren Verwendung.**

(30) Priorität : **21.03.81 DE 3111200**

(43) Veröffentlichungstag der Anmeldung : **06.10.82 Patentblatt 82/40**

(45) Bekanntmachung des Hinweises auf die Patenterteilung : **20.02.85 Patentblatt 85/08**

(84) Benannte Vertragsstaaten : **CH DE FR GB IT LI**

(56) Entgegenhaltungen :
**EP-A- 0 055 219**
**DE-A- 1 644 534**
**DE-B- 1 029 965**
**FR-A- 1 396 903**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Patsch, Manfred, Dr.**
**Fritz-Wendel-Strasse 4**
**D-6706 Wachenheim (DE)**
Erfinder : **Ruske, Manfred**
**Merziger Strasse 10**
**D-6700 Ludwigshafen (DE)**
Erfinder : **Hahn, Erwin, Dr.**
**Am Buechsenackerhang 11**
**D-6900 Heidelberg (DE)**

**EP 0 061 624 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue kationische Farbstoffe und deren Verwendung zum Färben und Bedrucken von Papier.

Die neuen Farbstoffe haben die allgemeine Formel

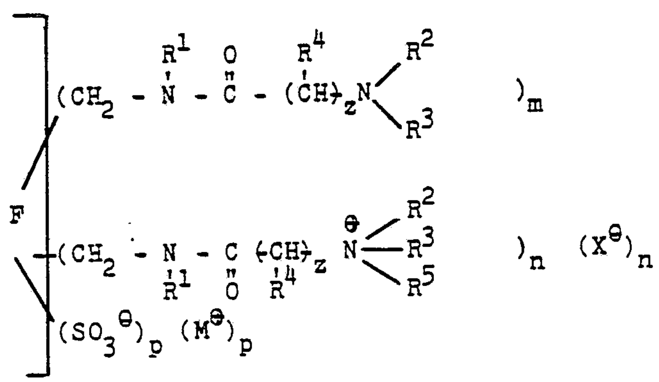

(I)

in der

F einen (n + m + p)-wertigen Rest eines Chinophthalons oder eines Xanthenfarbstoffs,

$R^1$ Wasserstoff oder $C_1$- bis $C_4$-Alkyl,

$R^2$ und $R^3$ unabhängig voneinander $C_1$- bis $C_{14}$-Alkyl, $C_2$- bis $C_4$-Hydroxyalkyl, $C_5$- bis $C_8$-Cycloalkyl, 2-Aminocyclopentyl-methyl, Benzyl, N,N-Di-$C_1$- bis $C_5$-alkylamino-$C_2$- bis $C_4$-alkyl, N-$C_5$- bis $C_8$-Cycloalkylamino-$C_2$- bis $C_4$-alkyl, N-$C_1$- oder $C_2$-Alkyl-N-$C_5$- bis $C_8$-cycloalkyl-amino-$C_2$- bis $C_4$-alkyl, wobei $R^2$ auch Wasserstoff sein kann, wenn n = 0 ist,

oder $-N<^{R^2}_{R^3}$ einen Pyrrolidin-, Imidazol-, 2-Ethyl-4-methylimidazol-, Morpholin-, Piperazin-, N'-$C_1$- bis $C_4$-Alkylpiperazin-, Pyridin-, 2-, 3- oder 4-Methylpyrridinrest oder

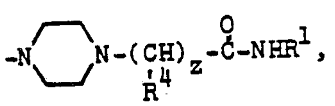

$R^4$ Wasserstoff oder Methyl,

$R^5$ $C_1$- bis $C_{12}$-Alkyl, $C_2$- bis $C_4$-Hydroxyalkyl oder Benzyl,

$X^\ominus$ ein Äquivalent eines Anions,

$M^\oplus$ $H^\oplus$ oder ein Äquivalent eines Kations,

z 1 oder 2,

p 0 oder 1,

m 0, 1, 2, 3 oder 4 und

n 0, 1, 2, 3 oder 4 bedeuten, wobei $1 \leq (m + n) \leq 4$ ist.

Die Farbstoffe (I) mit n = 0 sind in verdünnten Säuren und die Farbstoffe (I) mit quaternären Gruppen in Wasser gut bis leicht löslich. Trotz der hohen Löslichkeit sind die Farbstoffe auf Papier sehr stark substantiv. Die hohe Substantivität bewirkt, daß das mit den Farbstoffen der Formel I gefärbte oder bedruckte Papier ausgezeichnete Ausblutechtheiten aufweist. D. h. das mit den Farbstoffen (I) gefärbte Papier blutet weißes Begleitmaterial in Gegenwart von verdünnten Säuren, wie Milch- oder Essigsäure, verdünnten wäßrigen Alkalien oder Seifenlösungen, verdünnten Alkoholen, Öl oder Milch nicht an (Test nach DIN 53 991).

Aufgrund der hohen Substantivität der Farbstoffe erhält man bei der Massefärbung von Papier ein farbloses Abwasser.

Die gute Löslichkeit der Farbstoffe (I) ermöglicht Flüssigeinstellungen, die in der Papierindustrie in steigendem Maße bevorzugt werden, da solche Einstellungen ein staubfreies Arbeiten und eine einfache reproduzierbare Dosierung der Farbstoffe für die Färbung erlauben.

Die Farbstoffe (I) haben außerdem den Vorteil, daß das mit diesen Farbstoffen gefärbte Papier bleichbar ist. Diese Eigenschaft war bei hochsubstantiven Farbstoffen, mit einem sehr hohen sonstigen Echtheitsniveau bei den Naßechtheiten nicht vorherzusehen. Die Bleichbarkeit des mit (I) gefärbten Papiers bringt bei der Wiederverwendung von Abfallpapier und Altpapier große Vorteile, da bei der Aufarbeitung eine praktisch ungefärbte Papiermasse erhalten werden kann.

Als Substituenten kommen für $R^1$ neben Wasserstoff $C_1$- bis $C_4$-Alkyl, z. B. Methyl, Ethyl, Propyl und Butyl in Betracht. Vorzugsweise steht $R^1$ für Wasserstoff.

Für $R^2$ und $R^3$ sind im einzelnen außer den bereits bestimmt genannten z. B. zu nennen : $C_1$- bis $C_{14}$-Alkyl, $C_2$- bis $C_4$-Hydroxyalkyl und $C_5$- bis $C_8$-Cycloalkyl : Methyl, Ethyl, n-Propyl, i-Propyl, n-Butyl, i-Butyl, n-Amyl, i-Amyl, n-Hexyl, i-Hexyl, Heptyl, Octyl, 2-Ethylhexyl, Decyl, Dodecyl, Tridecyl, Tetradecyl, 2-Hydroxyethyl, 2- und 3-Hydroxypropyl ; Cyclopentyl, Cyclohexyl und Cyclooctyl ;

N,N-Di-$C_1$- bis $C_5$-alkylamino-$C_2$- bis $C_4$-alkyl : N,N-Di-methylaminoethyl, N,N-Diethylaminoethyl, N,N-Dipropylaminoethyl, N,N-Dibutylaminoethyl, 3-(N,N-Dimethylamino)-propyl, 3-(N,N-Diethylamino)-propyl, 3-(N,N-Dipropylamino)-propyl und 3-(N,N-Dibutylamino)-propyl ;

N-$C_5$- bis $C_8$-Cycloalkylamino-$C_2$- bis $C_4$-alkyl und N-$C_1$- oder $C_2$-Alkyl-N-$C_5$- bis $C_8$-cycloalkylamino-$C_2$- bis $C_4$-alkyl : N-Cyclohexylaminoethyl, 3-(N-Cyclohexylamino)-propyl, 3-(N-Cyclooctylamino)-propyl, N-Methyl-N-cyclohexylaminoethyl, 3-(N-Methyl-N-cyclohexylamino)-propyl ;

$R^2$ und $R^3$ können gleich oder verschieden sein.

$R^2$ kann auch für Wasserstoff stehen.

Außerdem kann die $-N<^{R^2}_{R^3}$ für Reste stehen, die sich vom Pyrrolidin, Imidazol, 2-Ethyl-4-methylimidazol, Morpholin, Piperazin, N-$C_1$- bis $C_4$-Alkylpiperazin, z. B. vom N-Methyl- oder N'-Ethylpiperazin, Pyridin, einen der 3 Picoline ableiten oder für einen Piperazinrest der Formel

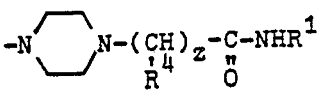

stehen.

Vorzugsweise stehen $R^2$ und $R^3$ für $C_1$- bis $C_4$-Alkyl, wie Methyl, Ethyl, Propyl und Butyl oder $-N<^{R^2}_{R^3}$ für einen Imidazol-, Pyrrolidin- oder Piperidinrest.

$R^4$ steht für Methyl, vorzugsweise für Wasserstoff.

Für $R^5$ kommen im einzelnen z. B. in Betracht : $C_1$- bis $C_{12}$-Alkyl und $C_2$- bis $C_4$-Hydroxyalkyl : Methyl, Ethyl, n- und i-Propyl, n- und i-Butyl, n- und i-Amyl, n- und i-Hexyl, Octyl, 2-Ethylhexyl, Decyl, Dodecyl, 2-Hydroxyethyl, 2- und 3-Hydroxypropyl, Hydroxybutyl und Benzyl.

Vorzugsweise steht $R^5$ für $C_1$- bis $C_4$-Alkyl, 2-Hydroxyethyl oder Benzyl.

Für $R^5$ sind Methyl, Ethyl, 2-Hydroxyethyl und Benzyl besonders bevorzugt.

Als Anionen sind für $X^{\ominus}$ z. B. zu nennen : Benzolsulfonat, o- oder p-Toluolsulfonat, $Cl^{\ominus}$, 1/2 $SO_4^{2\ominus}$, $CH_3OSO_3^{\ominus}$, $HO^{\ominus}$, $H_5C_2OSO_3^{\ominus}$, 1/2 $ZnCl_4^{2\ominus}$, Acetat, Lactat und Methoxyacetat.

Als Kationen kommen für $M^{\oplus}$ z. B. in Betracht : Alkalimetall- und Erdalkalimetallionen wie $Na^{\oplus}$, $K^{\oplus}$, $Li^{\oplus}$, 1/2 $Ca^{2\oplus}$, 1/2 $Mg^{2\oplus}$ und $(NH_4)^{\oplus}$.

p kann 0 oder 1 sein, vorzugsweise liegen Gemische aus Farbstoffen mit p = 0 und P = 1 vor, wobei im Mittel p zwischen 0 und 0,5 liegt. Besonders bevorzugt sind Farbstoffe I, in denen p = 0 ist.

Im Falle (m + n) > 1 können die Farbstoffe in Form von Mischungen aus Farbstoffen mit m und n je 1, 2, 3 oder 4 vorliegen, wobei m und n auch gebrochene Zahlen sein können.

Vorzugsweise ist (m + n) 1 bis 4, wobei m oder n auch 0 sein kann.

Besonders bevorzugt sind Farbstoffe mit m = 1 bis 3 und n = 0.

Ganz besonders bevorzugt sind Farbstoffe I mit m = 0 und n = 1 bis 3.

Für F sind als (m + n + p)-wertige Farbstoffreste zu nennen, die sich vom Chinophthalon und von Xanthenfarbstoffen ableiten.

Den neuen Farbstoffen I liegen die Farbstoffe der allgemeinen Formel

$$F(H)_{(m+n+p)} \qquad (II)$$

zugrunde. Die Farbstoffe II müssen amidomethylierbar sein. Die Farstoffe II sind bekannt oder nach bekannten Verfahren herstellbar.

Als vom Chinophthalon sich ableitende Farbstoffe sind z. B. 2-[1,3-Dioxo-hydrindyl-(2)]-chinolin und 2-(1,3-Dioxo-hydrindyl-(2)]-5,6-benzochinolin zu nennen. Die Chinophthalone werden durch Kondensation aromatischer o- oder peri-Dicarbonsäureanhydride mit gegebenenfalls noch weiter substituierte Chinaldinen hergestellt. Diese Farbstoffe können als Substituenten Halogen, wie Chlor oder Brom, Alkyl, Alkoxy, Phenyl, Cyan, Nitro, Alkanoylamino, Alkylmercapto und/oder Phenylmercapto tragen.

Als Reste von Xanthenfarbstoffen kommen für F solche in Betracht, die sich z. B. von C.I. Solvent Violet 10 ; C.I. No. 45190:1 und C.I. Solvent Dye C.I. No 45195 ableiten.

Besonders bevorzugt sind die in den Beispielen 1, 2, 3 und 16 beschriebenen Farbstoffe.

Die neuen Verbindungen der Formel I mit n = 0 werden vorteilhafterweise durch Umsetzen der Farbstoffe

$$F(H)_{(m+n+p)} \qquad (II)$$

a) mit Aminoacetamiden oder Aminopropionylamiden der Formel

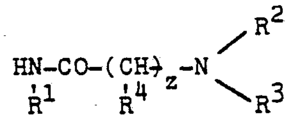

(III)

und wasserfreiem Formaldehyd oder

b) mit den entsprechenden N-Methylylolamiden

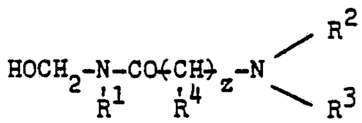

(IIIa)

in Gegenwart von sauren Mitteln erhalten. In den Formeln III und IIIa haben $R^1$, $R^2$, $R^3$, $R^4$ und z die oben angegebenen Bedeutungen.

Die Verbindungen III oder IIIa werden in mindestens der stöchiometrisch erforderlichen Menge, vorteilhafterweise im Überschuß, im Falle von III zusammen mit wasserfreiem Formaldehyd angewendet.

Der Formaldehyd kann in monomerer Form angewendet werden. Vorzugsweise verwendet man Paraformaldehyd oder Trioxan.

Die Umsetzung erfolgt im allgemeinen bei Temperaturen von 0 bis 130 °C, vorzugsweise bei Temperaturen von 0 bis 10 °C. Die Reaktionsdauer ist von der Zahl der in II einzuführenden Methylenamidgruppen, dem Farbstoff II, dem sauren Mittel und der Reaktionstemperatur abhängig. Die Reaktionsdauer liegt im allgemeinen zwischen 1 und 50 Stunden.

Als saure Mittel, die gleichzeitig auch als Reaktionsmedium dienen können, kommen für das Verfahren z. B. 80 bis 100 gew.-%ige Schwefelsäure oder Phosphorsäure, gegebenenfalls zusammen mit wasserabspaltenden Mitteln wie Schwefeltrioxid (Oleum), Phosphorpentoxid, Meta- oder Polyphosphorsäure, Essigsäureanhydrid, Benzol- oder Toluolsulfonsäure in Betracht. Als saures Mittel, das gleichzeitig auch als Reaktionsmedium dient, ist 96 bis 100 gew.-%ige Schwefelsäure und bis zu 12 gew.-%iges Oleum bevorzugt.

Die Menge an dem Reaktionsmedium ist nicht kritisch wenn das Reaktionsgemisch durchmischbar ist und bleibt. Im allgemeinen wendet man, bezogen auf II, die 5- bis 20-fache Gewichtsmenge an dem sauren Mittel an.

Gewünschtenfalls können bei der Umsetzung in Schwefelsäure oder Oleum während oder nach der Beendigung der Umsetzung mit III oder IIIa durch Erhöhen der Schwefelsäurekonzentration und/oder durch Erhöhen der Temperatur eine oder mehrere Sulfonsäuregruppen in die Verfahrensprodukte eingeführt werden. Farbstoffe für das Färben von Papier sollten, um gute Ausblutechtheiten zu behalten, in der Regel nicht mehr als im Mittel 0 bis 0,5 Sulfonsäuregruppen, je Molekül enthalten.

Zur Isolierung der Verfahrensprodukte der Formel I mit n = 0 wird das Reaktionsgemisch auf Wasser oder Eis/Wasser ausgetragen und die erhaltene saure Lösung oder Suspension neutral bis alkalisch bis etwa pH 11 gestellt und die Fällung abgetrennt, z. B. durch Filtrieren. Das Filtergut wird gegebenenfalls gewaschen und getrocknet oder in Form des wasserfeuchten Filtergutes weiterverarbeitet.

Für den Fall, daß die Verfahrensprodukte Sulfonsäuregruppen enthalten, liegen diese vorzugsweise in Form der Kalium-, Natrium- oder Ammoniumsalze vor.

Verbindungen der Formel I, die quartäre Gruppen enthalten, d. h. n ist 1 bis 4, werden aus den Farbstoffen I mit n = 0 durch Alkylierung in an sich bekannter Weise, z. B. durch Umsetzen mit den entsprechenden Schwefelsäurediestern wie Dimethylsulfat, Diäthylsulfat, den entsprechenden Sulfonsäureestern wie Toluolsulfonsäure-$C_1$- bis $C_4$-alkylestern, Benzolsulfonsäure-$C_1$- bis $C_4$-alkylestern, Ethylenoxid, Epichlorhydrin, Chlor-2- oder $C_3$-alkanolen wie 2-Chlorethanol, 2- oder 3-Chlorpropanol oder Benzylchlorid erhalten.

Als Alkylierungsmittel sind die Methyl- und Ethylester der Schwefelsäure, die Methyl- und Ethylester der Benzol- und Toluolsulfonsäure, Ethylenchlorhydrin, Ethylenoxid, Epichlorhydrin und Benzylchlorid bevorzugt.

Gegenüber den Farbstoffen gemäß FR-A-1 396 903 weisen die erfindungsgemäßen Farbstoffe nicht zu erwartende Vorteile auf.

Die Erfindung soll durch die folgenden Ausführungsbeispiele weiter erläutert werden. Die im folgenden angegebenen Teile und Prozentangaben beziehen sich auf das Gewicht. Die Absorptionsmaxima (λ max) der Farbstoffe wurden in Lösungen bestimmt, die — wenn nichts anderes angegeben ist — 0,02 g Farbstoff in 5 gew.-%iger Essigsäure enthielten.

## Beispiel 1

In 270 Teile 96 %ige Schwefelsäure werden nebeneinander bei 10 bis 15° 35 Teile 2-(N-Imidazolyl)-propionsäureamid und 7,5 Teile Paraformaldehyd eingetragen. Das Reaktionsgemisch wird auf 35 bis 40

°C erwärmt und eine Stunde bei dieser Temperatur gehalten. Nach dem Abkühlen auf 20 °C werden 16,5 Teile 2-[1,3-Dioxohydrindyl-(2)]-5,6-benzoychinolin eingetragen und anschließend das Gemisch eine Stunde bei 35 bis 40 °C gerührt. Nach 15 Stunden bei 23 °C werden weitere 3 Stunden bei 45 bis 50 °C gerührt. Die Reaktionsmischung wird auf Eiswasser ausgetragen und der Farbstoff durch Zugeben von 25 %igem Ammoniak (pH = 11) ausgefällt. Der Farbstoff wird abgesaugt und getrocknet. Ausbeute : 24 Teile des Farbstoffs der Formel

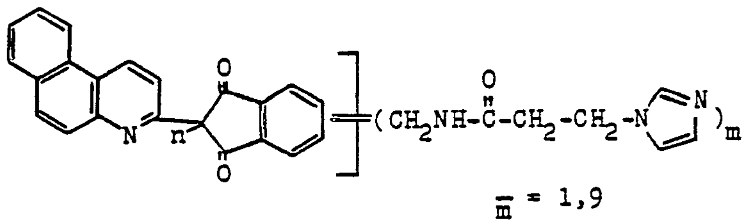

$\bar{m} = 1{,}9$

Analyse
für m = 1 $C_{29}H_{22}N_4O_3$(473) ber. N 11,8 %
für m = 2 $C_{36}H_{31}N_7O_4$(624) ber. N 15,7 % gef. N 15,3 %
$\lambda_{max}$ 363 und 422 nm.

Beispiel 2

Man verfährt entsprechend den Angaben des Beispiels 1, verwendet jedoch anstelle von 2(N-Imidazolyl)-propionsäureamid 39 Teile 2-(N-Piperidyl)-propionsäureamid und rührt das Reaktionsgemisch 3 Stunden bei 50 °C, dann erhält man 20 Teile des Farbstoffs der Formel

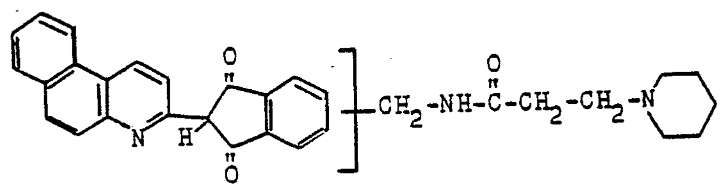

Analyse $C_{21}H_{29}N_3O_3$ (490) ber. N 8,6 % gef. N 8,5 %
$\lambda_{max}$ 417 nm

Beispiel 3

In 270 Teile 90 %ige Schwefelsäure werden bei 10 bis 15 °C (kühlen) nebeneinander 10,2 Teile 1-(N-Dimethylamino)-acetamid und 3 Teile Paraformaldehyd eingetragen und 2 Stunden bei 40 °C gerührt. Bei dieser Temperatur werden 16,5 Teile 2-[1,3-Dioxohydrindyl-(2)]-5,6-benzochinolin in Portionen eingetragen. Die Mischung wird 2 Stunden bei 40 °C und 48 Stunden bei 23 °C gerührt. Das Reaktionsgemisch wird auf Eiswasser ausgetragen, die Lösung mit Ammoniakwasser neutralisiert, der Niederschlag abgesaugt, mit Wasser gewaschen und getrocknet. Ausbeute : 19 Teile des Farbstoffs der Formel

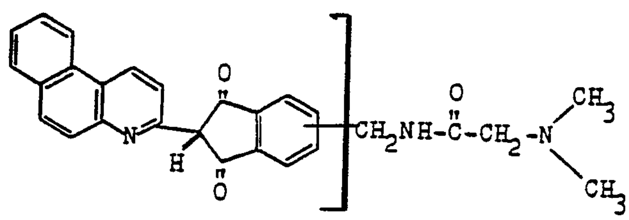

Analyse : $C_{27}H_{22}N_3O_3$ (436) ber. N 9,6 % gef. N 9,0 %
$\lambda_{max}$ 420 nm.

Beispiele 4 bis 15

Arbeitet man entsprechend den Angaben in den Beispielen 1, 2 oder 3, verwendet jedoch die äquivalenten Mengen an Amiden der Formel

$$H - \underset{R^1}{\underset{|}{N}} - CO - (CH_2)_z - A \quad ,$$

dann erhält man Farbstoffe der Formel

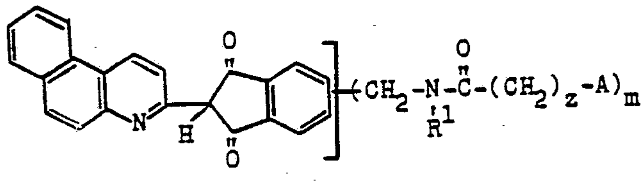

in der A, $R^1$, z und m die in der folgenden Tabelle angegebene Bedeutung haben. Die Farbstoffe lösen sich in 10 %iger Essigsäure. Das Absorptionsmaximum der Farbstoffe in 10 %iger Essigsäure ist in Spalte 6 angegeben.

| Beispiel | A | $R^1$ | z | $\bar{m}$ | $\lambda$max [nm] |
|---|---|---|---|---|---|
| 4 | $-N(C_3H_7)_2$ | H | 1 | 1,8 | 417 |
| 5 | 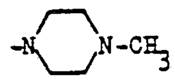 | H | 1 | 1,7 | 421 |
| 6 | 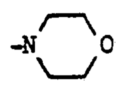 | H | 1 | 1 | |
| 7 | $-NH-CH_3$ | H | 2 | 1 | 419 |
| 8 | $-N(CH_3)_2$ | H | 2 | 1 | |
| 9 | $-N(CH_2-CH(OH)-CH_3)_2$ | H | 2 | 1 | |
| 10 | 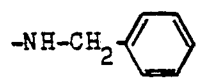 | H | 2 | 2 | 425 |
| 11 | 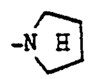 | H | 2 | 1 | 417 |
| 12 | 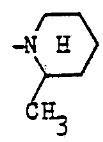 | H | 2 | 1 | 417 |
| 13 | 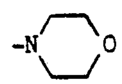 | H | 2 | 1 | 417 |
| 14 | $-N(C_3H_7n)_2$ | $-CH_3$ | 1 | 1 | 421 |
| 15 | 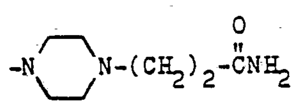 | H | 2 | 1 | 421 |

## Beispiel 16

In 270 Teilen 96 %iger Schwefelsäure werden nebeneinander 36,8 Teile 2 Pyrrolidino-propionsäureamid und 7,5 Teile Paraformaldehyd eingetragen und 2 Stunden bei 40 °C gerührt. Nach dem Abkühlen auf 0 bis 5 °C werden 26,9 Teile C.I. Solvent Dye ; C.I. No 45 195 in kleinen Portionen eingetragen und zunächst eine Stunde bei 5 bis 20 °C und dann 15 Stunden bei 20 bis 25 °C gerührt.

Die Mischung wird auf Eis ausgetragen, die Fällung abgesaugt, mit Wasser gewaschen und getrocknet. Ausbeute : 38 Teile des Farbstoffs der Formel

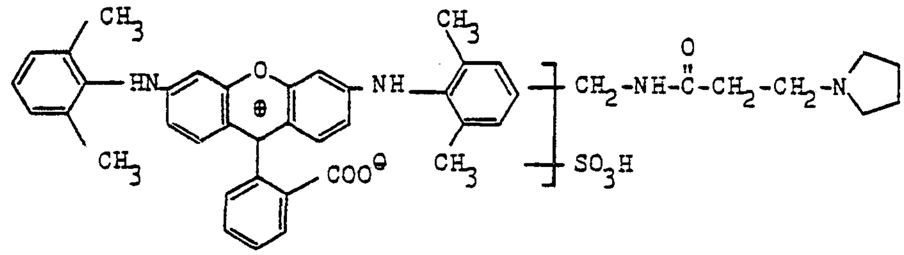

Analyse $C_{44}H_{45}N_4O_7S$ (773) ber. N 7,2 S 4,13 % gef. N 6,9 S 5,1
$\lambda_{max}$ 530 nm
Mit dem Farbstoff werden aus essigsaurer Lösung brillant rotgefärbte Papiere erhalten. Das Abwasser ist farblos.

Beispiel 17

In 270 Teile 96 %ige Schwefelsäure werden 40 Teile I Pyrrolidino-essigsäureamid und 3 Teile Paraformaldehyd eingetragen und 2 Stunden bei 40 °C gerührt. Die Mischung wird auf 0 °C kühlt und 25,5 Teile C.I. Solvent Violet 10, C.I. N° 45 190 : 1 in kleinen Portionen eingetragen.

Zunächst wird eine Stunde bei 5 bis 20 °C und dann 15 Stunden bei 20 bis 25 °C gerührt. Die Reaktionslösung wird auf Eiswasser ausgetragen und mit 25 %igem Ammoniak neutralisiert. Die Fällung wird abgesaugt, mit Wasser gewaschen und getrocknet.

Ausbeute : 38 Teile des Farbstoffs der Formel

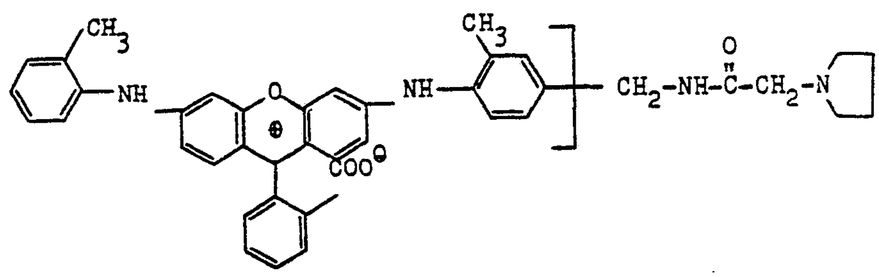

Analyse $C_{41}H_{38}N_4O_4$ (650) ber. N 8,6 % gef. N 8,6
$\lambda_{max}$ 528 nm
Der Farbstoff zieht mit brillantroter Farbe aus essigsaurer Lösung vollständig auf Papiermasse auf.

Beispiel 18

Zur einer homogenen Suspension von 48 Teilen des Farbstoffs aus Beispiel 3 in Form des 40 %igen wäßrigen Preßkuchens, 50 Teilen Wasser und 2 g Magnesiumoxid wurden bei 40 °C unter Rühren 19 Teile Dimethylsulfat zugegeben. Es wurde 3 h bei 40 °C gerührt, dann 2 h bei 60 °C und 0,5 h bei 80 °C. Dann wurden 2 g Bleicherde zugegeben und das Reaktionsgemisch filtriert. Es wurde eine 23 %ige wäßrige Lösung des Farbstoffs der Formel

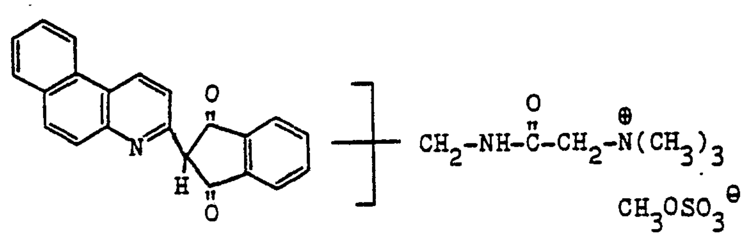

erhalten.
$\lambda_{max}$ : 410 nm.
Diese Lösung kann direkt zum Färben von Papier verwendet werden.

Anwendungsbeispiel 1

50 g Altpapier (holzhaltig) werden in einem Liter Wasser (10 °dH) bei Raumtemperatur zu einer

Fasersuspension aufgeschlagen. Anschließend wird mit 1 Liter gleichem Wasser verdünnt. Der Suspension wird eine Mischung aus 2 g einer 10 %igen essigsauren Lösung des Farbstoffs aus Beispiel 1 und 10 ml Wasser zugesetzt. Das Gemisch wird 15 Minuten leicht gerührt und dann mit Wasser auf 0,5 % Feststoffgehalt verdünnt. Mit dieser Suspension werden auf Labor-Blattbildner der Firma Franck Papierblätter von 80 g/m$^2$ hergestellt und die feuchten Blätter 5 Minuten bei 100 °C getrocknet. Man erhält ein gelb gefärbtes Schrenzpapier.

Das Abwasser ist farblos. Die Ausblutechtheiten des gefärbten Papieres (DIN 53 991) sind sehr gut.

Gleich gute Ergebnisse werden erhalten, wenn das Altpapier durch a) eine Mischung aus 30 % Birkensulfatzellstoff und 70 % Kiefernsulfatzellstoff, durch b) Kiefernsulfitzellstoff oder c) Kiefernsulfatzellstoff ersetzt wird. Man erhält gelbe Papiere mit hervorragenden Echtheitseigenschaften.

Das gefärbte Papier kann durch Behandeln mit Natriumhydrochloritlösung (Menge 2 % aktives Chlor ; bezogen auf den Papierstoff) vollständig entfärbt werden.

Anwendungsbeispiel 2

15 kg Altpapier (holzhaltig), 25 kg gebleichter Holzschliff und 10 kg ungebleichter Sulfatzellstoff werden im Pulper zu einer 3 %igen wäßrigen Stoffsuspension aufgeschlagen. Die Stoffsuspension wird in einer Färbebütte auf 2 % verdünnt. Dieser Suspension werden dann — gerechnet auf trockene Gesamtfaser — nacheinander unter Rühren 0,5 % lösliche, oxidativ abgebaute Maisstärke, 5 % Kaolin und 1,25 kg einer 5 %igen essigsauren Lösung des Farbstoffs aus Beispiel 3 zugegeben. Nach 20 Minuten wird der Stoff in der Mischbütte mit 1 % (bezogen auf atro Faser) einer Harzleim-Dispersion versetzt. Die homogene Stoffsuspension wird auf der Papiermaschine kurz vor dem Stoffauflauf, mit Alain auf pH 5 eingestellt.

Auf der Papiermaschine wird ein 80 g/m$^2$ schweres Tütenpapier maschinenglatt hergestellt, welches eine klare Gelbnuance mit guten Ausblutechtheiten nach DIN 53 991 aufweist. Das gefärbte Papier ist praktisch farblos bleichbar.

Anwendungsbeispiel 3

25 kg Katalogpapier (Ausschuß), 60 kg gebleichter Holzschliff (65° Schopper Riegler) und 15 kg ungebleichter Sulfitzellstoff werden im Pulper in 2 500 l Wasser aufgeschlagen. Der 4 %igen wäßrigen Stoffsuspension werden 0,4 % lösliche Stärke, 16 % Kaolin und 2 % Talkum (berechnet auf trockene Faser) zugegeben. Anschließend wird die Stoffsuspension am Refiner auf 45° Schopper Riegler ausgemahlen. Der Stoffsuspension werden 12 kg einer 10 %igen, essigsauren Lösung des Farbstoffs aus Beispiel 1 zugesetzt, (= 1 % trockener Blaufarbstoff, bezogen auf Faser). Nach 15 Minuten Ziehzeit wird dem Stoff Harzleim-Dispersion (Menge : 0,6 % trocken, bezogen auf Faser) zugesetzt. Nach 10 Minuten wird der aus der Mischbütte abfließende Stoff kontinuierlich mit Wasser auf 0,8 % Stoffgehalt verdünnt und kontinuierlich mit Alaun ($Al_2(SC_4)_3 \cdot 18\ H_2O$) auf pH 4,5 gestellt (gemessen im Siebwasser) und in den Stoffauflauf gepumpt.

Man erhält gelbes Katalogpapier (60 g/m$^2$), das nach DIN 53 991 gute Ausblutechtheiten aufweist.

Werden anstelle des Farbstoffs aus Beispiel 1 die Farbstoffe der Beispiele 2 oder 3 verwendet, dann erhält man gelb gefärbtes Papier mit guten Naßechtheiten.

Das Papier kann durch Behandeln mit Natriumchloritlösung praktisch vollständig entfärbt werden.

**Ansprüche**

1. Kationische Farbstoffe der Formel

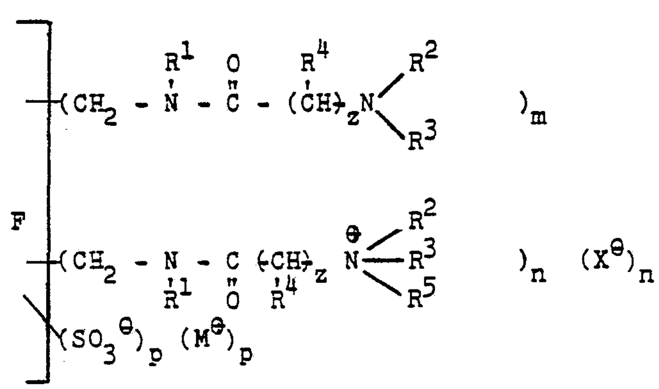

(I),

in der

F einen (n + m + p)-wertigen Rest eines Chinophthalons oder eines Xanthenfarbstoffs,

$R^1$ Wasserstoff oder $C_1$- bis $C_4$-Alkyl,

$R^2$ und $R^3$ unabhängig voneinander $C_1$- bis $C_{14}$-Alkyl, $C_2$- bis $C_4$-Hydroxyalkyl, $C_5$- bis $C_8$-Cycloalkyl, 2-Amino-cyclopentyl-methyl, Benzyl, N,N-Di-$C_1$- bis $C_5$-alkylamino- $C_2$- bis $C_4$-alkyl, N-$C_5$- bis $C_8$-Cycloalkylamino-$C_2$- bis $C_4$-alkyl, N-$C_1$- oder $C_2$-Alkyl-N-$C_5$- bis $C_8$-cycloalkyl-amino-$C_2$- bis $C_4$-alkyl, wobei $R^2$ auch Wasserstoff sein kann, wenn n = 0 ist,

oder $-N{<}^{R^2}_{R^3}$ einen Pyrrolidin-, Imidazol-, 2-Ethyl-4-methylimidazol-, Morpholin-, Piperazin-, N'-$C_1$- bis $C_4$-Alkylpiperazin-, Pyridin-, 2-, 3- oder 4-Methylpyridinrest oder

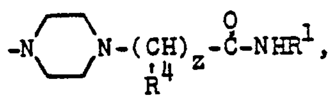

$R^4$ Wasserstoff oder Methyl,

$R^5$ $C_1$- bis $C_{12}$-Alkyl, $C_2$- bis $C_4$-Hydroxyalkyl oder Benzyl,

$X^{\ominus}$ ein Äquivalent eines Anions,

$M^{\oplus}$ $H^{\oplus}$ ein Äquivalent eines Kations,

z 1 oder 2,

p 0 oder 1,

m 0, 1, 2, 3 oder 4 und

n 0, 1, 2, 3 oder 4 bedeuten, wobei $1 \leq (m + n) \leq 4$ ist.

2. Farbstoffe gemäß Anspruch 1, dadurch gekennzeichnet, daß in der Formel $R^1$ und $R^4$ für Wasserstoff stehen.

3. Farbstoffe gemäß Anspruch 1 oder 2, dadurch gekennzeichnet, daß p = 0 und n = 0 sind.

4. Farbstoffe gemäß Anspruch 1, 2 oder 3, dadurch gekennzeichnet, daß $R^2$ und $R^3$ für $C_1$- bis $C_4$-Alkyl oder $-N{<}^{R^2}_{R^3}$ für Imidazolyl, Pyrrolidinyl oder Piperidinyl stehen.

5. Farbstoffe gemäß Anspruch 1, 2, 3 oder 4, dadurch gekennzeichnet, daß n = 0 und m 1, 2 oder 3 ist.

6. Farbstoffe gemäß Anspruch 1, 2, 3 oder 4, dadurch gekennzeichnet, daß m = 0, p = 0 und n = 1, 2 oder 3 ist.

7. Farbstoffe gemäß Anspruch 6, dadurch gekennzeichnet, daß $R^5$ für $C_1$- bis $C_4$-Alkyl, 2-Hydroxyethyl oder Benzyl steht.

8. Farbstoffe germäß Anspruch 6 oder 7, dadurch gekennzeichnet, daß $R^2$ und $R^3$ für $C_1$- bis $C_4$-Alkyl oder $-N{<}^{R^2}_{R^3}$ für Pyrrolidinyl, $R^5$ für Methyl, Ethyl, 2-Hydroxyethyl oder Benzyl, $X^{\ominus}$ für $Cl^{\ominus}$, $CH_3OSO_3^{\ominus}$, Benzolsulfonat, Toluolsulfonat, Acetat, Lactat oder Methoxyacetat und n für 1, 2 oder 3 stehen.

9. Farbstoffe gemäß Anspruch 1, gekennzeichnet durch die Formel

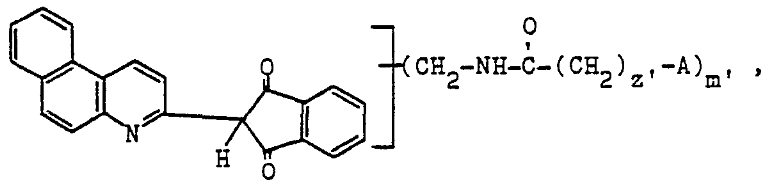

in der A

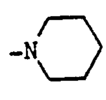 , 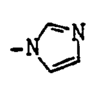 , 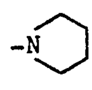 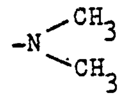

oder

$$-\overset{\oplus}{N}(CH_3)_3 \quad X^{\ominus}$$

Z' = 1 oder 2, $X^{\ominus}$ ein Äquivalent eines Anions und

m' = 1 oder 2 bedeuten.

10. Farbstoff gemäß Anspruch 1, gekennzeichnet durch die Formel

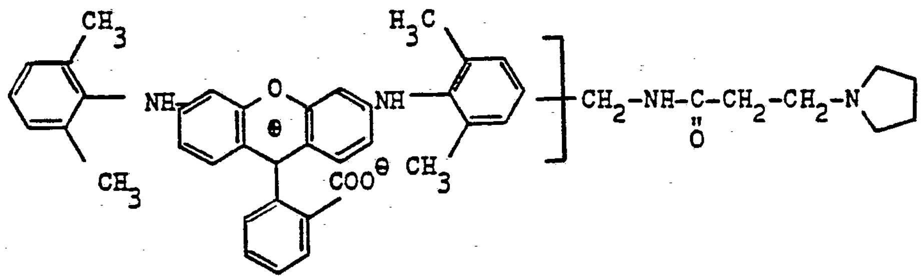

11. Verwendung der Farbstoffe gemäß den Ansprüchen 1 bis 10 zum Färben und Bedrucken von Papier.

**Claims**

1. A cationic dye of the formula

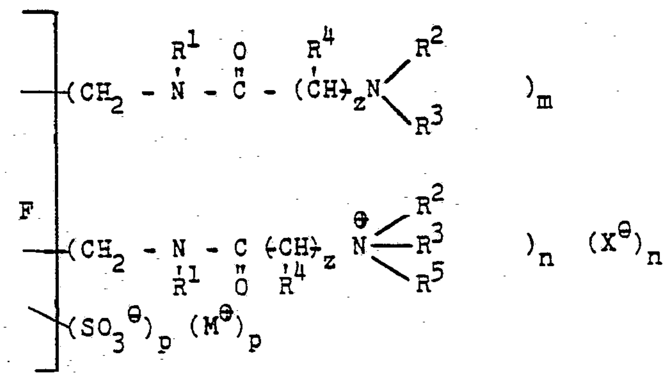

(I),

where
F is an (n + m + p)-valent radical of a quinophthalone or a xanthene dye,
$R^1$ is hydrogen or $C_1$-$C_4$-alkyl,
$R^2$ and $R^3$ independently of one another are $C_1$-$C_{14}$-alkyl, $C_2$-$C_4$-hydroxylalkyl, $C_5$-$C_8$-cycloalkyl, 2-aminocyclopentylmethyl, benzyl, N,N-di-$C_1$-$C_5$-alkylamino-$C_2$-$C_4$-alkyl, N-$C_5$-$C_8$-cycloalkylamino-$C_2$-$C_4$-alkyl or N-$C_1$- or $C_2$-alkyl-N-$C_5$-$C_8$-cycloalkylamino-$C_2$-$C_4$-alkyl, and $R^2$ can also be hydrogen if n is 0,
or $-N\genfrac{}{}{0pt}{}{R^2}{R^3}$ is a pyrrolidine, imidazole, 2-ethyl-4-methylimidazole, morpholine, piperazine, N'-$C_1$-$C_4$-alkylpiperazine, pyridine or 2-, 3- or 4-methylpyridine radical or is

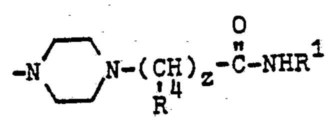

$R^4$ is hydrogen or methyl,
$R^5$ is $C_1$-$C_{12}$-alkyl, $C_2$-$C_4$-hydroxyalkyl or benzyl,
$X^\ominus$ is one equivalent of an anion,
$M^\oplus$ is $H^\oplus$ or one equivalent of a cation,
z is 1 or 2,
p is 0 or 1,
m is 0, 1, 2, 3 or 4 and
n is 0, 1, 2, 3 or 4, and $1 \leq (m + n) \leq 4$.

2. A dye as claimed in claim 1, wherein $R^1$ and $R^4$ in the formula are hydrogen.
3. A dye as claimed in claim 1 or 2, wherein p is 0 and n is 0.
4. A dye as claimed in claim 1, 2 or 3, wherein $R^2$ and $R^3$ are $C_1$-$C_4$-alkyl, or $-N\genfrac{}{}{0pt}{}{R^2}{R^3}$ is imidazolyl, pyrrolidinyl or piperidinyl.
5. A dye as claimed in claim 1, 2, 3 or 4, wherein n is 0 and m is 1, 2 or 3.
6. A dye as claimed in claim 1, 2, 3 or 4, wherein m is 0, p is 0 and n is 1, 2 or 3.
7. A dye as claimed in claim 6, wherein $R^5$ is $C_1$-$C_4$-alkyl, 2-hydroxyethyl or benzyl.

8. A dye as claimed in claim 6 or 7, wherein $R^2$ and $R^3$ are $C_1$-$C_4$-alkyl, or 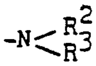 is pyrrolidinyl, $R^5$ is methyl, ethyl, 2-hydroxyethyl or benzyl, $X^{\ominus}$ is $Cl^{\ominus}$, $CH_3OSO_3^{\ominus}$ benzenesulfonate, toluenesulfonate, acetate, lactate or methoxyacetate, and n is 1, 2 or 3.

9. A dye as claimed in claim 1, of the formula

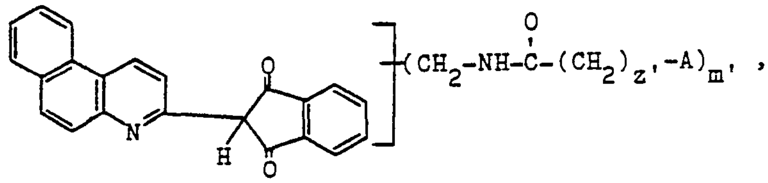

where A is 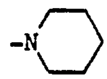 , 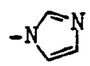 , 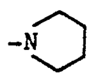 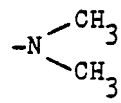

or $-\overset{\oplus}{N}(CH_3)_3$ $X^{\ominus}$

Z' is 1 or 2, $X^{\ominus}$ is one equivalent of an anion, and m' is 1 or 2.

10. A dye as claimed in claim 1, of the formula

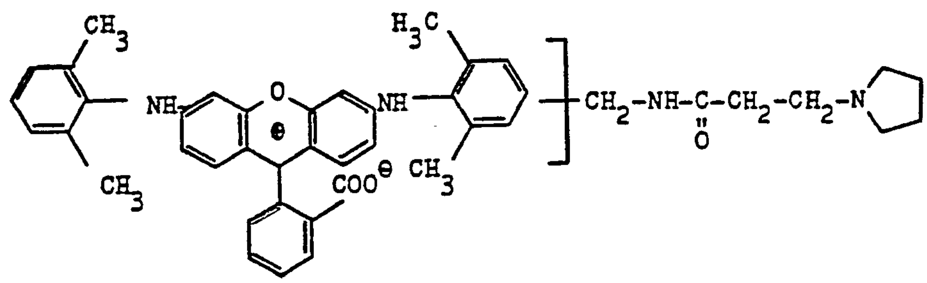

11. The use of a dye as claimed in claims 1 to 10 for dyeing and printing paper.

**Revendications**

1. Colorants cationiques de formule

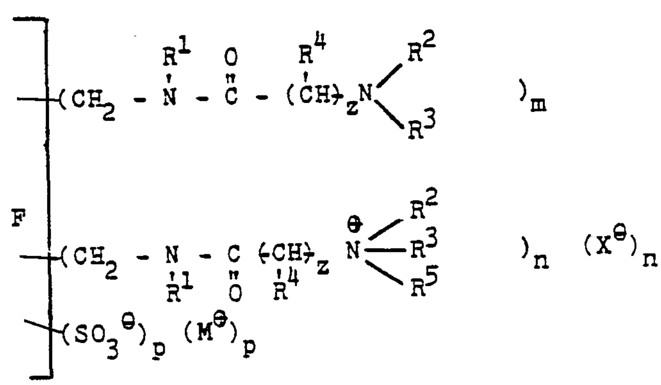

(I)

dans laquelle :

F est un radical (n + m + p) valent d'une quinophtalone ou d'un colorant xanthénique,

$R^1$ est un hydrogène ou un alcoyle en $C_1$ à $C_4$,

$R^2$ et $R^3$ sont, indépendamment l'un de l'autre, un alcoyle en $C_1$ à $C_{14}$, un hydroxyalcoyle en $C_2$ à $C_4$, un cycloalcoyle en $C_5$ à $C_8$, un 2-amino-cyclopentyl-méthyle, un benzyle, un N,N-dialcoyl($C_1$-$C_5$)-amino-alcoyle($C_2$-$C_4$), un N-cycloalcoyl($C_5$-$C_8$)-amino-alcoyle($C_2$-$C_4$), un N-alcoyl($C_1$-$C_2$)-N-cycloalcoyl($C_5$-$C_8$)-amino-alcoyle($C_2$-$C_4$), $R^2$ pouvant être également un hydrogène lorsque n = 0,

ou 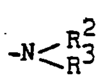 représente un radical pyrrolidine, imidazole, 2-éthyl-4-méthylimidazole, morpholine,

pipérazine, N'-alcoyl($C_1$-$C_4$)-pipérazine, pyridine, 2-, 3- ou 4-méthylpyridine ou

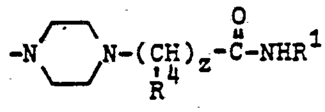

$R^4$ est un hydrogène ou un méthyle,
$R^5$ est un alcoyle en $C_1$ à $C_{12}$, un hydroxyalcoyle en $C_2$ à $C_4$ ou un benzyle,
$X^{\ominus}$ est un équivalent d'un anion,
$M^{\oplus}$ est $H^{\oplus}$ ou un équivalent d'un cation,
z est égal à 1 ou 2,
p est égal à 0 ou 1,
m est égal à 0, 1, 2, 3 ou 4 et
n est égal à 0, 1, 2, 3 ou 4, avec $1 \leq (m + n) \leq 4$.

2. Colorants selon la revendication 1, caractérisés en ce que, dans la formule, $R^1$ et $R^4$ sont mis pour des atomes d'hydrogène.

3. Colorants selon la revendication 1 ou 2, caractérisés en ce que p = 0 et n = 0.

4. Colorants selon l'une quelconque des revendications 1 à 3, caractérisés en ce que $R^2$ et $R^3$ sont mis pour des alcoyles en $C_1$ à $C_4$ ou 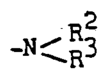 est mis pour un imidazolyle, un pyrrolidinyle ou un pipéridinyle.

5. Colorants selon l'une quelconque des revendications 1 à 4, caractérisés en ce que n = 0 et m = 1, 2 ou 3.

6. Colorants selon l'une quelconque des revendications 1 à 4, caractérisés en ce que m = 0, p = 0 et n = 1, 2 ou 3.

7. Colorants selon la revendication 6, caractérisés en ce que $R^5$ est mis pour un alcoyle en $C_1$ à $C_4$, un 2-hydroxyéthyle ou un benzyle.

8. Colorants selon la revendication 6 ou 7, caractérisés en ce que $R^2$ et $R^3$ sont mis chacun pour un alcoyle en $C_1$ à $C_4$ ou 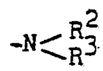 est mis pour un pyrrodinyle, $R^5$ pour un méthyle, un éthyle, un 2-hydroxyéthyle ou un benzyle, $X^{\ominus}$ pour $Cl^{\ominus}$, $CH_3OSO_3^{\ominus}$, un sulfonate de benzène, un sulfonate de toluène, un acétate, un lactate ou un méthoxyacétate et n pour 1, 2 ou 3.

9. Colorants selon la revendication 1, caractérisés par la formule

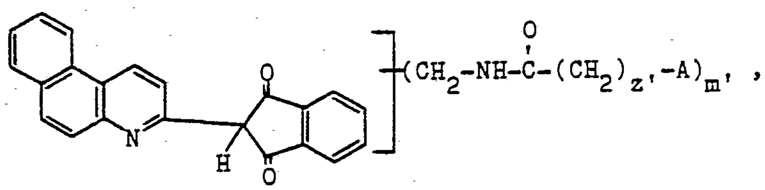

dans laquelle A est mis pour 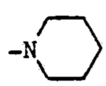 , 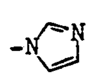 , 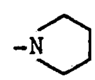 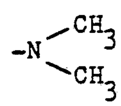

ou

$$-\overset{\oplus}{N}(CH_3)_3 \quad X^{\ominus}$$

z' = 1 ou 2, $X^{\ominus}$ est un équivalent d'un anion et m' = 1 ou 2.

10. Colorants selon la revendication 1, caractérisés par la formule

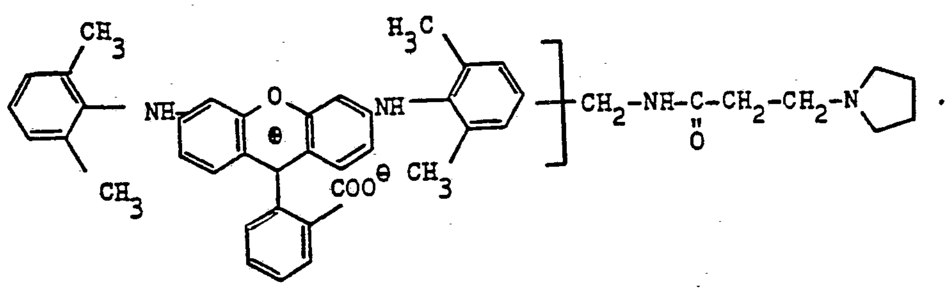

11. Utilisation des colorants selon l'une quelconque des revendications 1 à 10 pour la teinture et l'impression de papier.